# EUROPEAN PATENT APPLICATION

(11) **EP 4 167 119 A1**
(43) Date of publication of application: **19.04.2023**
(21) Application number: 21398017.0
(22) Date of filing: 18.10.2021
(51) Int. Cl.: G06F 21/88, G06F 21/83, G06F 21/35

(54) **ELECTRONIC DEVICE FOR CONTROLLING USER ACCESS TO A COMPUTER WORKSTATION**

(71) Applicant: Ferreira Noras, Jorge Alberto, 2560-346 Torres Vedras (PT)
(72) Inventor: Ferreira Noras, Jorge Alberto, 2560-346 Torres Vedras (PT)
(74) Representative: do Nascimento Gomes, Rui

(57) **Abstract**

The present disclosure falls within the area of controlled access to computer workstations, such as personal computers used in business or institutional environment. An electronic device (10) for controlling a user's access to a computer workstation (30) which, upon receipt of a message (110), determines a proximity parameter value of an issuing device (120) and whether a digital identifier is digitally associated with the workstation (130), wherein if the received digital identifier is digitally associated with the workstation and if the determined proximity parameter value remains below a predefined threshold (140), an unblocking action of an access to the workstation is maintained (150), thereby enabling user access to the workstation, and a highly reliable control of access to a computer workstation without foregoing the simplicity of the solution and without recourse to biometric-based technologies.

## Description

### TECHNICAL FIELD

The present disclosure falls within the area of controlled access to computer workstations, such as personal computers used in business or institutional environment.

### STATE OF THE ART

A computer workstation, such as a personal computer, can be accessed in a number of ways. Typically, it is mentioned that there is an access control or an authentication of a user so that the latter can access the computer workstation.

The most common way known in the state of the art is to enter a password known only to the user via a user interface such as a keyboard. This password is usually alphanumeric, which is known only to the user and recognised by the access control system.

This form of access is widely used but it is vulnerable to attacks by third parties, who may gain undue access to the contents of the personal computer.

Especially in professional environments, where computer workstations with particularly sensitive information are used, it is even more relevant to properly control access, ensuring that the user who is accessing is duly authorized to do so.

For this purpose, solutions have also been developed based on biometric parameters, such as facial recognition through a camera or fingerprint recognition using a suitable reader.

On the other hand, these solutions require the collection and storage of sensitive information from users, such as a photograph or a fingerprint, and do not allow validating continuously, over a period of time, the user identification.

In parallel, simpler solutions based on wireless communications have been used.

In many companies and institutions, access is granted to employees through personal and non-transferable cards, which contain unique data identifying that particular employee.

These are physical cards, which are based typically on RFID technology and allow access to more or less restricted areas of the institution, guaranteeing - at least - access to the interior of the institution itself.

Additionally, they also allow controlling entry and exit times, as well as having real-time information about the number of people in each restricted area of the institution.

The object of the present disclosure allows a highly reliable access control to a computer workstation without compromising the simplicity of the solution and without using biometric-based technologies.

### SUMMARY OF THE DISCLOSURE

An electronic device for controlling access of a user to a computer workstation is the object of the present disclosure.

In an embodiment, the device comprises wireless receiving means and a controller, the controller being configured to, under wireless reception via said receiving means of a message having a digital identifier associated to the user, performing the following actions:
determine a proximity parameter value of a device issuing said message to said receiving means,
determine whether the digital identifier received is digitally associated with the workstation.

In an embodiment, the controller is further configured to:
if the received digital identifier is digitally associated with the workstation, maintain an unlocking action of an access to the workstation, thus allowing the user access to the workstation, and
additionally, the unlocking action is maintained only for as long as the determined proximity parameter value remains below a predefined threshold.

The proximity parameter value determined by the controller thus makes it possible to control the user's distance to the receiving means, and therefore to the device. Thus, the device does not simply act to grant unlimited access to a user, but instead ensures that the user must be in its proximity for the access to be maintained. Otherwise, the access is terminated. The proximity parameter value may consist of physical distance.

Additionally, this functionality is incorporated in a device, simplifying and reducing the number of devices that are in the proximity of the workstation and simultaneously making use of the communication compatibility between device and computer workstation, without creating a new device on the computer workstation.

A computer workstation is also an object of the present disclosure.

In an embodiment, the computer workstation comprises the electronic device of the present disclosure, in any one of its embodiments.

In an embodiment, the workstation further comprises one or more encapsulation elements comprising a plurality of electronic components, the electronic device being embedded in an encapsulation element.

A system for controlling access of a user to a computer workstation is also an object of the present disclosure.

In an embodiment, the system comprises the electronic device of the present disclosure, in any one of its embodiments, and a computer workstation.

A method for controlling the access of a user to a computer workstation is also an object of the present disclosure.

In an embodiment, the method comprises the steps of:
receiving, wirelessly, a message with a digital identifier associated to the user,
determining a proximity parameter value of a device that sends said message,
determining whether the digital identifier received is associated with the workstation, and
if the received digital identifier is digitally associated with the workstation, and as long as the proximity parameter value remains below a predefined threshold, the user's access to the workstation is electronically allowed.

Thus, the method of the present disclosure provides, like the electronic device, a highly reliable control of access to a computer workstation without foregoing the simplicity of the solution and without recourse to biometric-based technologies.

### DESCRIPTION OF THE FIGURES

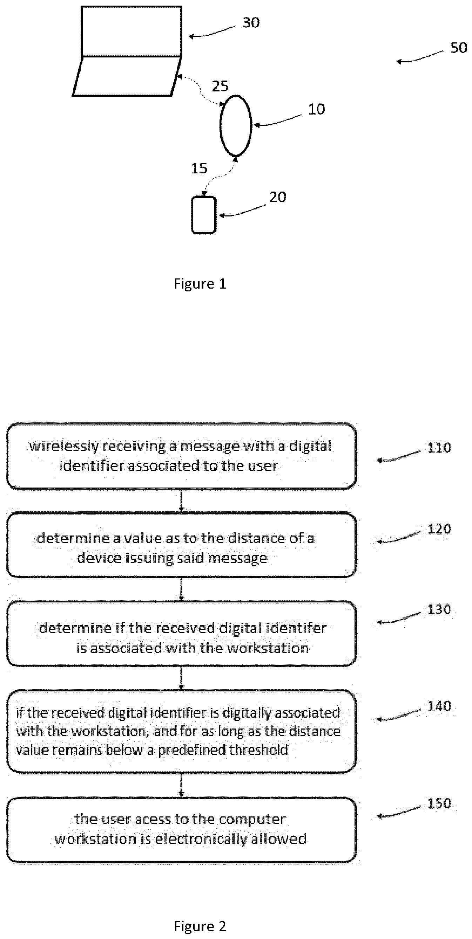

Figure 1 - representation of an embodiment of the system (50) of the present disclosure, comprising an electronic device (10) as a peripheral device, an external element (20) associated to a user and to a digital identifier, and a computer workstation (30), depicted as a laptop computer. Also illustrated is a first communication (15) between the external element (20) and the electronic device (10), representing a message being sent with a digital identifier by the external element (20), and received by the receiving means of the electronic device (10). A second communication (25) between the electronic device (10) and the computer workstation (30) is also illustrated, representing the action of unlocking an access to the computer workstation (30).

Figure 2 - representation of an embodiment of the method of the present disclosure, comprising the steps of wirelessly receiving a message with a digital identifier associated to the user (110), determining a proximity parameter value of a device issuing said message (120), determining whether the received digital identifier is associated with the workstation (130), and if the received digital identifier is digitally associated with the workstation, and as long as the proximity parameter value remains below a predefined threshold (140), the user's access to the workstation is electronically allowed (150).

### DETAILED DESCRIPTION

Various embodiments of the electronic device of the present disclosure are described below.

The receiving means are configured to receive a message with a digital identifier associated to the user.

The receiving means may consist of one or more receiver and/or transceiver devices. The greater number of receiver and/or transceiver devices of the receiving means allows for greater reliability in the determination of the proximity parameter by the controller, which can be balanced with greater simplicity of the electronic device containing fewer receiver and/or transceiver devices.

The proximity parameter may be determined by any method known in the prior art for determining the proximity or distance of a device from a wirelessly received message such as, for example, based on the received signal strength indicator (RSSI) as determined in the receiving means.

In an embodiment, prior to receiving the message with a digital identifier associated to the user, an association may be made between the digital identifier, the user, and the computer workstation. This will allow the electronic device, upon receiving said message, to reliably determine whether the digital identifier received is digitally associated with the workstation.

In one embodiment, the association between a user, a digital identifier, and a computer workstation may be stored in the electronic device itself, which thus comprises data storage means for storing such association. Alternatively, such association may be stored in a remote or local database electronically accessible to the electronic device.

The predefined threshold may vary between 1 cm and 5 m, optionally between 4 cm and 3 m, optionally between 10 cm and 2 m, optionally between 20 cm and 1 m. Optionally, the predefined threshold may be 1, 2, 3, 4, 5, 6, 7, 8, 9, 10, 20, 30, 40, 50, 60, 70, 80, 90, 100, 150, 200, 250, 300, 350, 400, 450, 500, 550, 600, 650, 700, 750, 800, 850, 900, 950, 1.000, 1.500, 2.000, 2.500, 3.000, 3.500, 4.000, 4.500, or 5.000 cm.

Optionally, the proximity parameter value may be between a minimum and a maximum value, the maximum value corresponding to the predefined threshold. As regards distance, the variation between the minimum and the maximum value may be 10, 50, 100, 200, 300, 400, 500, 600, 700, 800, 900, 1.000, 1.500, 2.000, 2.500, 3.000, 3.500 or 4.000 cm.

In an embodiment, the electronic device is configured to, for a received message with a first digital identifier, ignoring received messages comprising different digital identifiers, if the first received digital identifier is determined to be digitally associated with the workstation and as long as the determined proximity parameter value remains below a predefined threshold. This allows that after an identification of a (first) digital identifier, and thus of a user that is associated to it, the electronic device does not continue to try to detect other digital identifiers.

In an embodiment, the controller is configured to, if the determined proximity parameter value exceeds the predefined threshold, stop the unlocking action of access to the workstation and/or perform a blocking action of the access to the workstation, thus preventing the workstation access. In this embodiment, the controller no longer holds the unlocking action, but ceases it.

In an embodiment, the controller may maintain a continuous action of communication with a computer workstation, which keeps it unlocked and which, when ceased, leads to the workstation being blocked.

Alternatively, the controller may actively perform a workstation lockout action. In an embodiment, the controller may have performed a single communication action with a computer workstation that has unlocked it, only blocking it by issuing a further communication action, this time for the workstation to be blocked.

In an embodiment, the controller is additionally configured to cease the action for unlocking the access to a workstation and/or to perform a blocking action of access to a workstation, thus preventing the user from accessing the workstation when no messages are received for a predefined period of time.

As an example, the receiving means may forward any incoming message to the controller, which determines the association. The controller can then also determine the time elapsed between received messages and, if a predefined period of time is exceeded, perform the aforementioned actions.

In an embodiment, the controller is additionally configured to stop the action for unlocking the access to a workstation and/or to perform a blocking action to a workstation access when the given proximity parameter value exceeds the predefined threshold.

As an example, and as mentioned, the controller may determine, based on a message received through the receiving means, a proximity parameter. The controller may then determine whether said proximity parameter exceeds the predefined threshold and if so, perform said blocking actions.

In an embodiment, after the action of unlocking an access to the workstation and/or the action of blocking an access to the workstation has been performed, the electronic device is configured to again receive incoming messages comprising digital identifiers distinct from a first digital identifier that had led to the unlocking of the computer workstation.

In an embodiment, the electronic device comprises a portable hardware input peripheral which is configured to control a graphic user interface on the computer workstation.

This allows an existing peripheral of the computer workstation to be used as an electronic device, simplifying and reducing the number of devices in the workstation's vicinity while making use of the communication compatibility between peripheral and computer workstation, without creating a new device on the computer workstation. Optionally, the peripheral may consist of a mouse or a keyboard configured to maintain communication with a computer workstation.

Optionally, the communication between electronic device and a computer workstation is wireless and/or wired. Optionally, the wireless communication is based on Bluetooth, WiFi, or other local area network wireless communication protocol standard. Optionally, the wireless communication is based on USB or other wired communications protocol standard between an electronic device such as a peripheral and a computer workstation.

In an embodiment, the portable hardware input peripheral comprises two or more interface elements and is configured to, upon actuation of the interface elements, enabling a mode of operation in which the wireless receiving means are capable of wirelessly receiving the message with a digital identifier associated to the user. This makes it possible to decrease the time during which the peripheral remains in an operating mode of continuous message reception determination. Optionally, said interface elements consist of keys.

In an embodiment, the electronic device additionally comprises wireless transmitting means, the wireless transmitting means being optionally configured to power an external element that consequently sends said message with a digital identifier associated to the user, the wireless transmitting means being optionally configured to power an external element comprising a RFID tag. This enables greater interoperability with pre-existing systems, since the electronic device contains all the elements to identify a message with a digital identifier associated to a user, even in the event that said message comes from a device such as a non-reconfigurable RFID tag. Furthermore, it allows reducing the complexity of the external element and of a system comprising the electronic device.

In an embodiment of the object of the present disclosure, the wireless receiving means and/or the wireless transmitting means are radio frequency-based, preferably being compatible with RFID, WiFi or Bluetooth (IEEE 802.11) or IEEE 802.15.4.

Various embodiments of the computer workstation of the present disclosure are described below.

In an embodiment, the computer workstation comprises one or more encapsulation elements comprising a plurality of electronic components.

As an example, the computer workstation may consist of a personal computer, such as a fixed computer (desktop), a portable computer (laptop), or a tablet. In the case of a desktop, the encapsulation element consists of the casing, commonly referred to as a tower, within which the various modules are arranged. In this example, the electronic device is also embedded in the casing, in such a way that it can still receive wirelessly, through said receiving means, a message with a digital identifier associated to the user. In the case of a laptop, the encapsulation elements are typically two, being articulately coupled to each other, one of them comprising a screen and the other one a keyboard, and inside which the electronic components comprising the laptop are arranged. In this example, the electronic device is also embedded in one of the encapsulation elements, in such a way that it can still receive wirelessly through said receiving means a message with a digital identifier associated to the user. In the case of a tablet, the encapsulation element consists of an encapsulation comprising a touch screen on one side, and inside which the electronic components comprising the tablet are arranged. In this example, the electronic device is also embedded in the encapsulation element, such that it can still receive wirelessly through said receiving means a message with a digital identifier associated to the user.

As another example, the computer workstation may consist of an industrial workstation operable by an operator, typically comprising a main encapsulation element that defines the form factor of the industrial workstation. In this example, the electronic device is also embedded in an encapsulation element of the industrial workstation, such that it can further receive wirelessly via said receiving means a message with a digital identifier associated to the user.

Additionally, in one embodiment, the computer workstation consisting of an industrial workstation is configured to i) register at least one tracking identifier to each item produced in the industrial workstation and ii) digitally associate the tracking identifier to the digital identifier, thus enabling the tracking of each item produced in the industrial workstation to have associated, also, the information about the operator, which consists of the digital identifier.

Various embodiments of the system of the present disclosure are described below.

In one embodiment of the aforementioned system, the computer workstation is the computer workstation of the present disclosure in any one of its embodiments, in particular the computer workstation comprising the electronic device of the present disclosure, and further comprising one or more encapsulation elements comprising a plurality of electronic components, the electronic device being embedded in an encapsulation element.

In an embodiment of the system, the computer workstation is configured to maintain a user access for as long as the action of the electronic device for unlocking an access is maintained.

In an embodiment of the system, the computer workstation is configured to cease a user access, thereby blocking access to the workstation, if the unlocking action of the electronic device ceases and/or if the electronic device performs an access blocking action.

In an embodiment of the system, the computer workstation is configured so that the user access to the workstation includes access to one or more resources of the computer workstation. The resources may include one or more programs, digital documents, and/or features contained in the computer workstation.

In an embodiment of the system, the computer workstation comprises a personal computer, optionally consisting of a personal computer. The resources thus comprise one or more programs and/or digital documents, optionally all of the programs and/or digital documents contained in the personal computer, except a program enabling the access control.

The personal computer may consist of a fixed computer (desktop), a portable computer (laptop) or a tablet.

In an embodiment of the system, the latter additionally comprises an external element configured to wirelessly send a message with a digital identifier associated to the user, the external element optionally comprising an RFID tag.

In an embodiment, the system comprises a plurality of electronic devices, each associated with a computer workstation.

In an embodiment, the system comprises a plurality of external elements and respective digital identifiers, each one associated to a user.

In an embodiment, the system is configured in such a manner that each user and respective external elements and digital identifiers are associated with one or more computer workstations.

In an embodiment of the system, and additionally, the computer workstation may be further configured so that the user access permission is dependent on an additional action comprising a second digital identifier.

In an embodiment, the workstation is configured to determine whether the second digital identifier is digitally associated with the workstation, the unlocking of which or the user access permission being dependent on that determination.

In an embodiment, the second digital identifier includes a password entered by the user into the computer workstation.

In an embodiment, the second digital identifier includes a biometric parameter entered by the user at the computer workstation.

In an embodiment, the biometric parameter consists of a fingerprint, the computer workstation comprising fingerprint reading means that are suitable for reading and, consequently, entering the biometric parameter.

In an embodiment, the biometric parameter consists of facial recognition of the user, the computer workstation comprising means for reading the user's face, optionally a digital camera, suitable for reading and consequently entering the biometric parameter.

Various embodiments of the present disclosure are described below.

In an embodiment of the method, if the determined proximity parameter value exceeds the predefined threshold, the action of unlocking an access to the workstation is ceased and/or the action of blocking an access to the workstation is performed, thereby preventing access to the workstation.

In an embodiment of the method, the computer workstation ceases a user access, thereby preventing access to the workstation, if the unlocking action is ceased and/or an access blocking action is performed.

In various embodiments of the method, the latter comprises method steps for implementing the object of any of the electronic device and/or system claims.

The controller may consist of any computational controller device known in the prior art, such as a microcontroller.

In various embodiments, the electronic device, the computer workstation, the external element, the system, and/or elements thereof comprise components for executing at least some of the example features and resources of the described methods, whether by means of hardware components (such as memory and/or processor), software, or any combination thereof.

In various embodiments, the controller may consist of or comprise a microcontroller, having the ability to receive external data via inputs and provide actuation of outputs, based on configured rules and/or predefined programming.

An article for use with the electronic device, the computer workstation and/or the external element, such as a pre-recorded storage device or other similar computer-readable medium, including program instructions recorded thereon, or a computer data signal carrying computer-readable program instructions may direct a device to facilitate implementation of the methods described herein. It is understood that such apparatus, articles of manufacture and computer data signals are also within the scope of the present disclosure.

A "computer-readable medium" is understood as any medium that can store instructions for use or execution by a computer or other computing device, including read-only memory (ROM), erasable programmable read-only memory (EPROM) or flash memory, random access memory (RAM), a portable floppy disk, a hard disk drive (HDD), a solid state storage device (e.g., NAND flash or synchronous dynamic RAM (SDRAM)), and/or an optical disc, such as a Compact Disc (CD), Digital Versatile Disc (DVD), or Blu-Ray ^{™} Disc.

As will be evident to a person skilled in the art, the present invention should not be limited to the embodiments described herein, with a number of changes being possible, which remain within the scope of this invention.

Of course, the preferred embodiments above described are combinable in the different possible forms, the repetition of all such combinations being herein avoided.

## Claims

1. An electronic device for controlling access of a user to a computer workstation, the device being **characterized in that** it comprises wireless receiving means and a controller, the controller being configured to, under wireless reception via said receiving means of a message having a digital identifier associated to the user:
determine a proximity parameter value of a device issuing said message to said receiving means,
determine whether the received digital identifier is digitally associated with the workstation, and
the controller being further configured to:
if the received digital identifier is digitally associated with the workstation, maintain an unlocking action of an access to the workstation, thus allowing the user access to the workstation, and
additionally, the unlocking action is maintained only for as long as the determined proximity parameter value remains below a predefined threshold.

2. A device according to the previous claim, wherein the controller is additionally configured to, if the determined proximity parameter value exceeds the predefined threshold, cease the action of unlocking an access to the workstation and/or perform the action of blocking an access to the workstation, thereby preventing access to the workstation.

3. A device according to any one of the previous claims, wherein the controller is additionally configured to, if:
no message is received during a predefined period of time, or
the determined proximity parameter value exceeds the predefined threshold,
cease the action of unlocking an access to the workstation and/or perform the action of blocking an access to the workstation, thereby preventing the user's access to the workstation.

4. A device according to any one of the previous claims, wherein it consists of a portable hardware input peripheral configured to control a graphic user interface at the computer workstation, optionally consisting of a mouse, a monitor or a keyboard configured to maintain a communication with a computer workstation, said communication being optionally wireless or wired.

5. A device according to the previous claim, wherein the portable hardware input peripheral comprises two or more interface elements, optionally keys, and is configured to, upon actuation of the interface elements, activate a mode of operation wherein the wireless receiving means are capable of wirelessly receiving the message with a digital identifier associated to the user.

6. A device according to any one of the previous claims, additionally comprising wireless transmitting means, the wireless transmitting means being optionally configured to power an external element which consequently sends said message with a digital identifier associated to the user, the wireless transmitting means being optionally configured to power an external element comprising an RFID tag.

7. A computer workstation **characterized in that** it comprises the electronic device of any one of the previous claims, the workstation comprising one or more encapsulation elements comprising a plurality of electronic components, the electronic device being embedded in an encapsulation element.

8. A system for controlling access of a user to a computer workstation, **characterized in that** it comprises the electronic device of any one of the previous claims and a computer workstation.

9. A system according to the previous claim, wherein the computer workstation is configured to maintain a user access for as long as the action of the electronic device for unlocking an access is maintained.

10. A system according to the previous claim, wherein the computer workstation is configured to cease a user access, thereby blocking access to the workstation, if the unlocking action of the electronic device ceases and/or if the electronic device performs an access blocking action.

11. A system according to any one of claims 8-10, wherein the computer workstation is configured so that the user access to the workstation includes access to one or more resources of the computer workstation.

12. A system according to the previous claim, wherein the computer workstation comprises a personal computer, optionally consisting of a personal computer.

13. A system according to any one of claims 8-12, further comprising an external element configured to wirelessly sending a message with a digital identifier associated to the user, the external element optionally comprising an RFID tag.

14. A method for controlling access of a user to a computer workstation, the method being **characterized in that** it comprises the steps of:
wirelessly receiving a message with a digital identifier associated to the user,
determining a proximity parameter value of a device issuing said message
determining whether the digital identifier received is associated with the workstation, and
if the received digital identifier is digitally associated with the workstation, and as long as the proximity parameter value remains below a predefined threshold, the user is electronically allowed access to the workstation.

15. A method according to the previous claim wherein, if the determined proximity parameter value exceeds the predefined threshold, the action of unlocking an access to the workstation is ceased and/or the action of blocking an access to the workstation is performed, thereby preventing access to the workstation, and optionally, the computer workstation ceases a user access, thereby preventing access to the workstation, if the unlocking action is ceased and/or an access blocking action is performed.
